# EUROPEAN PATENT SPECIFICATION

(11) **EP 0 685 161 B1**
(45) Date of publication and mention of the grant of the patent: **20.10.1999**
(21) Application number: 94500180.8
(22) Date of filing: 11.11.1994
(51) Int. Cl.: A21B 1/28, A21B 1/10

(54) **Improvements to heat cycle bakery and confectionery ovens**
Mit zirkulierenden Verbrennungsgasen beheizter Ofen für Backwaren
Four de cuisson à chauffage de circulation pour produits de boulangerie

(30) Priority: 19.05.1994 ES 9401102; 19.05.1994 ES 9401103
(43) Date of publication of application: 06.12.1995
(73) Proprietor: INDUSTRIAL SALVA, S.A., E-20100 Lezo (Guipuzcoa) (ES)
(72) Inventor: Eguilegor Ramirez, Marcial c/o Idustr. Salva, SA, E-20100 Lezo, Guipuzcoa (ES)
(74) Representative: Carpintero Lopez, Francisco

(56) References cited:
- DE-A- 2 300 950
- DE-A- 3 931 621
- FR-A- 2 195 148
- GB-A- 764 835
- GB-A- 798 962
- GB-A- 839 045
- US-A- 1 657 959

## Description

### OBJECT OF THE INVENTION

The present invention relates to a number of improvements to baking ovens heated by combustion gases circulating in radiant panels with a single baking chamber into which tray-trolleys with the products to be baked are introduced, as defined in claim 1.

These improvements primarily relate to the design and location of the various oven compartments to ensure circulation of the huge quantities of gases involved, and to the process for mixing combustion gases that are at an extremely high temperature, and returning gases that are at a lower temperature, to obtain a homogeneous resulting mix, as required by an oven of this kind.

Another object of the invention lies in a number of improvements to the assembly, layout and control of the radiant heating hearths as such so as to allow the number of hearths assembled and their position within the baking chamber to be changed, when the chamber is only one and the oven is of the kind known as a multilevel oven.

The aim of this latter improvement is not only to adjust each hearth independently but to successfully vary the flow of combustion gases in the various areas of a same hearth.

### BACKGROUND OF THE INVENTION

Baking ovens generally comprise a number of independent chambers into which trays carrying the products to be baked are inserted, or else comprise a single chamber into which a tray-trolley carrying the products is inserted, various heating means existing for the said chambers, namely: electric resistors, oil, hot air, heat fluid coils or combustion gas radiators.

The above all suffer the same problem, namely the need for the same heat level to be present throughout the areas and levels in order for the products to be uniformly baked, and the heat energy to be made the most of. This problem is dealt with differently depending upon the method used to heat the oven, most effective being electric heating using resistors or using as heat fluid oils circulating through coils propelled by a pump that is independently controlled by valve systems.

French Patent number FR-A-2138655 describes a simpler method, applicable to heating by means of combustion gases, that comprises using a gas combustion chamber located in a mixing chamber, having a top hole for combustion gases to be exhausted and two front flat inclined surfaces forming a sort of wedge against which residual gases returning from the baking chamber and propelled by a fan are directed, which gases hit the said wedge and are largely directed towards the top portion of the combustion chamber, thereby mixing with the hot gases emerging through its top hole. The mixture of gases thus produced is again directed towards the heating circuits of the baking chambers. The invention described above however fails to achieve a fully homogeneous mix, because the two air flows are not fully mixed, part of the hot air escaping towards the heating circuit without coming into contact with the colder gas returning from the chambers.

The above solution can therefore be used with ovens having small independent chambers, but could not be validly applied to large ovens having a baking chamber, for instance of the kind allowing tray-trolleys to be inserted, for the huge quantity of air required to heat the whole chamber uniformly would not be successfully homogenised.

Furthermore, in all currently existing ovens heated by combustion gases, the combustion chamber lies at its lower portion and the baking chambers are placed right above the same, and it is hence absolutely impossible to use tray-trolleys.

The adaptability to changing market requirements is also very important to users, both as regards the level of production and as regards varying the products to be manufactured, without this necessarily meaning having to change ovens. The need moreover to obtain uniformly baked products and to make the most of energy pose a true problem when choosing a suitable oven with regard to both capacity and profitability.

This problem is especially significant in single chamber baking ovens loaded using tray-trolleys in which the radiant hearths and the radiators heating the same, usually carry their elements welded to one another, forming a compact unit, which makes it very difficult to change the number of baking shelves used, and only allows a portion of the hearths to be used, where independent heat control is provided for each hearth, leaving the rest out of service.

### DESCRIPTION OF THE INVENTION

The oven subject of the invention is constructed taking a single baking chamber having radiant heating panels into which tray-trolleys are introduced carrying the products to be baked. Next to the said chamber lies an aspiration manifold, and attached to its side is a large aspiration lung designed to receive air returning from the oven hearths through the aspiration manifold, which air will later be propelled by two turbines to a mixing chamber, located on the lower portion, wherein the gas combustion chamber is located. At this mixing chamber the combustion gases generated, saving a small part thereof that is exhausted through the funnel, and the returning gases are mixed, and the ready-mixed gases go to an expansion chamber that leads into an impulsion manifold that redirects the same to the radiant panels.

The combustion chamber is cylindrical in shape and one of its bases opens to and faces a deflecting cone, which cone is partially inserted in the chamber leaving only a free ring for the output of the gases generated inside the said chamber. The outer wall of the combustion chamber is further provided with a number of small holes that also allow the output of the combustion gases, which they do spreading out along the outer circumference of the said chamber.

With this layout, air returning from the radiant panels arrives at the mixing chamber propelled by the two turbines and is forced to circulate around the combustion chamber thereby mixing with the gas generated within such chamber and emerging through the circumferential holes on its outer wall. The combustion gas that does not leave through the said holes does so through the ring defined between the front of the chamber and the deflecting cone, encountering the ready-mixed gases leaving the chamber through a hole defined on the partition between the mixing chamber and the expansion chamber, mixing therewith before leaving the mixing chamber.

The said partition lies at very little distance from the base of the deflecting cone (approximately 40-50 mm) and conforms an extremely narrow passage for air that prevents returning air from exhausting directly through the said vent to the expansion chamber without mixing with the combustion gases.

The extremely homogeneous mixture thus obtained in spite of the huge amounts at issue eliminates the need for making later complex adjustments at the radiant panels to achieve homogeneous temperatures throughout the same.

Four evaporators are moreover located in the mixing chamber, lying on the circumference of the combustion chamber, thereby directly receiving the combustion gases and the heat let off by the combustion chamber, and the whole mass in the said evaporators is heated to a high temperature thereby allowing a large quantity of vapour to be obtain that is thereafter channelled to the baking chamber by means of four pipes connected to the vapour distribution manifold.

A safety trap is provided on the top wall of the impulsion manifold comprising a tray siliconised to the roof and held by very weak wires, flying off in the event of an explosion to allow the gases to exhaust and prevent the entire oven from exploding. The said tray is chained to the structure to cause no damages when it flies off.

Furthermore, a solution has been devised as regards assembly, layout and adjustment at the radiant hearths of the oven subject hereof, that relies upon the use of a number of modules that are suitably coupled inside the baking chamber to allow an oven to be formed with the desired number and layout or size of baking levels.

The said modules comprise a hearth that in turn comprises a number of radiant panels and a tie plate at a right angle to the said hearths, the said plate being the means sealing the back of the baking chamber, and therefore the internal layout of the chamber can be changed, as regards existing baking levels, by changing the number of modules used and/or their position.

The proposed hearths comprise a number of radiant panels lying next to each other, each comprising a two-way duct for the combustion gases used for heating purposes, the gas input branch being longer than the output branch, thereby allowing the gases propelled from the impulsion manifold located at the back of the oven, to enter the radiant panels through the relevant input holes, whereas returning gases collect at the aspiration manifold located right next to the baking chamber.

In light of the above, in order to change the baking levels in a particular oven, the rear plate that serves as a partition between the impulsion and the aspiration chambers is changed, the plate having as many holes as there are air input ducts in the radiant panels, located to match the distribution of expected baking levels.

The modules comprised by the hearths and their tie plates are then assembled, screwing the modules to each other, thereby giving shape to the various baking levels within the chamber, and the rear wall of the baking chamber. The said tie plates all have different sizes, depending upon the number of levels required and their distribution, to successfully make up a full rear wall, or else have a set length, being screwed to a number of transverse strips of plate completing the spacing there is between the modules.

The said construction also allows the oven to be very easily and independently adjusted. This adjustment can be made independently for each radiant panel used, and it is therefore not only possible to provide for different heatings at each baking level but for the extent of heating between areas on a same level to be varied on each of the hearths formed, the more the radiant panels used to form each hearth the greater the possibilities of adjustment.

In order to achieve the said adjustment a number of plates adjusting the passage of air to each gas input duct are fitted at the partition between the aspiration and the impulsion manifolds, and hence if their position is changed a greater or smaller quantity of combustion gases are allowed into the relevant panel. Such adjustment is especially important, for the size of the oven and the convection currents arising within the chamber, due to the temperature differences, usually cause the upper areas thereof to be at a higher temperature, and hence need a lesser degree of heating than the lower areas. With the system subject hereof it is very simple when assembling the oven to conveniently locate the adjustment plates, closing the gas input ducts to a greater or lesser extent, thereby easily offsetting the said convection effect.

Furthermore, and in order to offset heat losses through the floor at the area where the tray-trolley is inserted, a lower hearth is provided, located on the floor of the chamber, the function of which is not naturally to heat the products to be baked but to offset the said heat losses.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

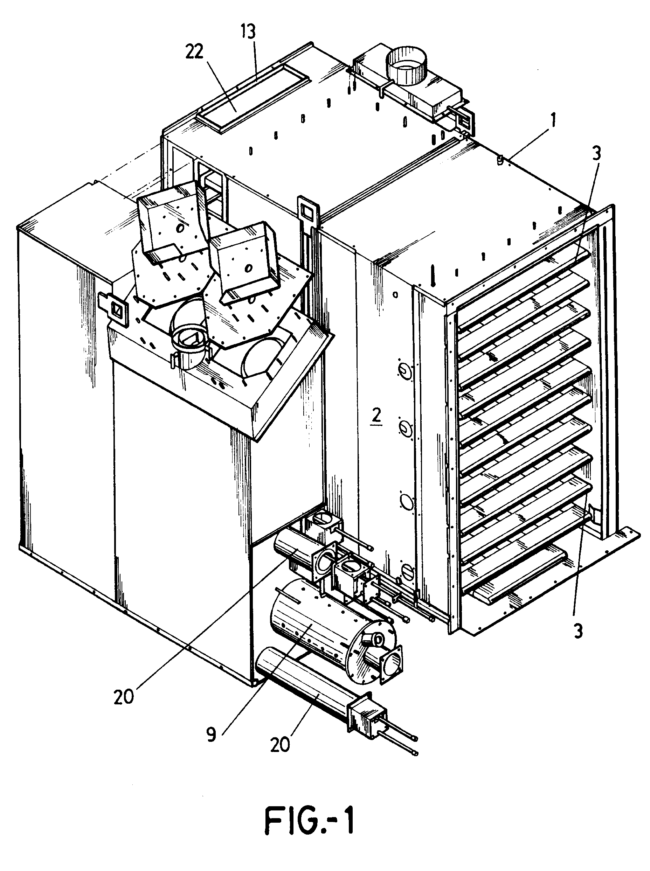

Figure 1.- Is an overview of the oven, seen from the side through which the tray-trolley is inserted.

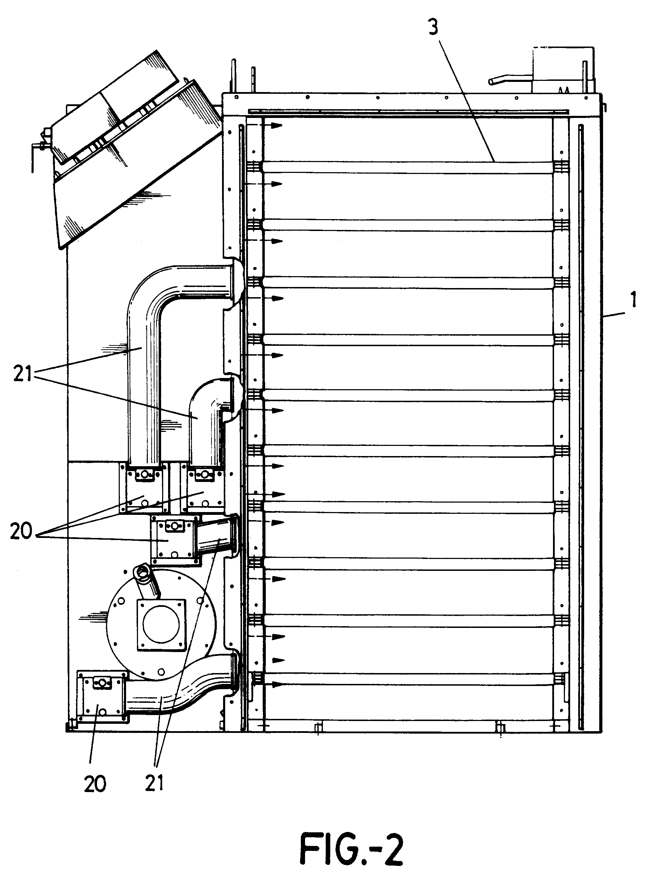

Figure 2.- Is a front view of the oven, showing the heating hearths and the evaporators and evaporating manifolds.

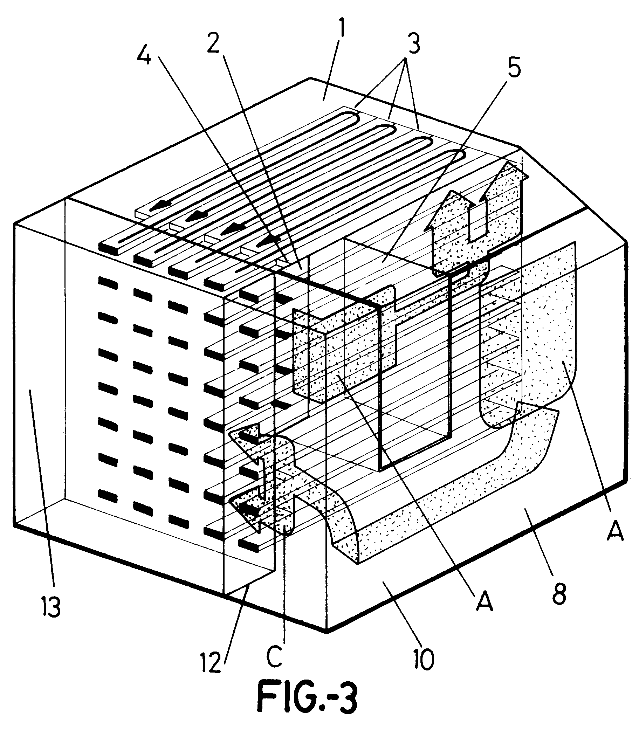

Figure 3.- Is a schematic overview showing the various chambers and manifolds making up the oven in blocks.

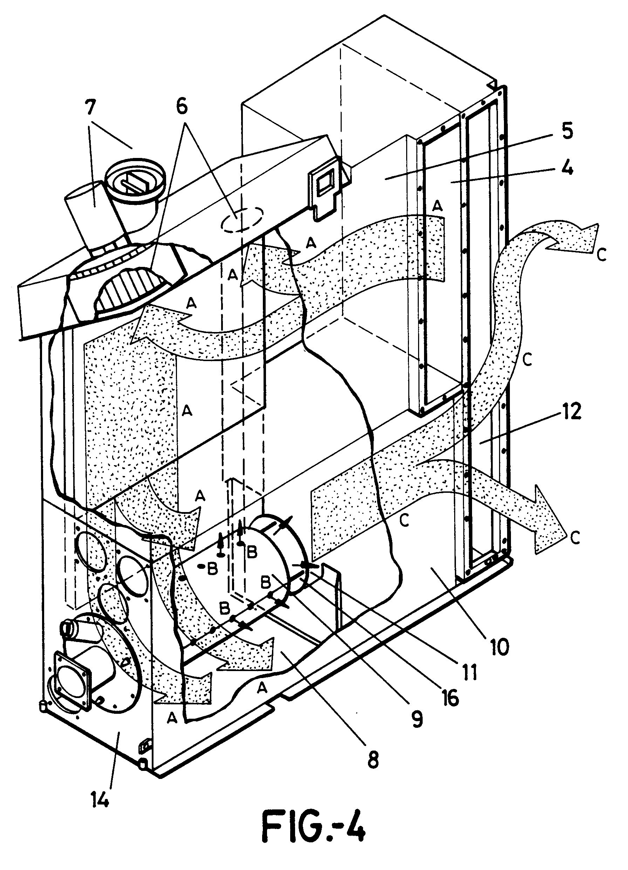

Figure 4.- Shows the distribution and shape of the impulsion, mixing, expansion and returning chambers, the arrows showing the circulating gas flows.
Figure 5.- Is a sectional view of the combustion chamber showing the way in which the gases are mixed.
Figure 6.- Is an overview and a side view of the assembly of the radiant hearths in the respective oven, obtained from basic modules.
Figure 7.- Is an overview and a side view of another assembly of the oven from the basic modules shown in the previous figure.
Figure 8.- Is an overview of the baking chamber, showing the partition or rear plate with the gas input holes to the radiant panels.
Figure 9.- Finally shows two different positions of the adjustment plates and the manner in which these are driven when fitted over the holes provided on the cover or rear partition shown in figure 8.

### PREFERRED EMBODIMENT OF THE INVENTION

In accordance with the figures, it can be observed that the invention subject hereof has attached to the main baking chamber (1) an aspiration manifold (2) that receives air (A) returning from the heating radiators (3) and leading through an opening (4) into a large aspiration chamber or lung (5) in which it builds up. This returning air (A) passes through two round openings (6) provided on the roof of the chamber (5) and is drawn in and propelled by two turbines (7) towards the mixing chamber (8), filling it up, circulating around the cylindrical combustion chamber (9), then passing, now mixed with combustion gases (B), to an expansion chamber (10) through an eight-angled opening (11), which chamber supplies, through a large window (12), the manifold (13) that propels the combustion gases to the oven hearths.

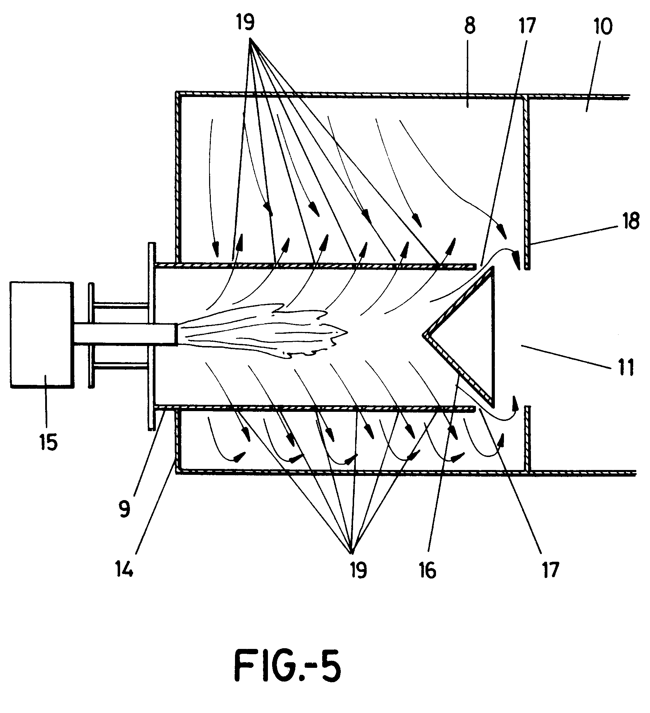

The said combustion chamber (9), cylindrical in shape as shown in figure 5, is tied through one of its bases to an outer wall (14) of the chamber (8), and has a burner (15) coupled to the said base, whereas its other base faces a deflecting cone (16) forming a narrow annular groove (17) with the said chamber (9) for part of the combustion gases to leave.

The outer surface of the combustion chamber (9) has a number of small holes (19) provided at four uniformly spaced generators through which the combustion gases (B) flow to the outside of the chamber, mixing with the returning gases (A) circulating around the combustion chamber.

The deflecting cone (16) is located with its base lying parallel to a partition (18) separating the mixing chamber (8) and the expansion chamber (10), having an eight-angled or round hole (17) that is devised as the only passage for air to reach the expansion chamber (10).

The mixing procedure is therefore carried out during two stages, a first stage at which the returning gases (A) circulating around the combustion chamber (9) mix with the combustion gases (B) flowing through the circumferential holes (19), and a second stage between the first mix described that tends to pass into the expansion chamber (10) through the eight-angled hole (11) meeting on their way with the combustion gases (B) emerging through the annular hole (17) thereby for an extremely homogeneous mixture to be obtained.

Four evaporators (20) are moreover disposed within the mixing chamber (8) tied to the partition (14) around the combustion chamber (9) thereby receiving a large quantity of heat let off by direct radiation from the combustion chamber (9) and by the combustion gases (B) on leaving through the holes (19), the said evaporators (20) being connected to ducts (21) channelling the vapour generated inside the said evaporators (20) to the baking chamber (1).

The top roof of the impulsion manifold (13) is provided with a safety trap (22) closing a window provided on the said roof, held by thin wires and siliconised to such window, the strength of the wires not being enough to resist the pressure exerted by an explosion within the oven.

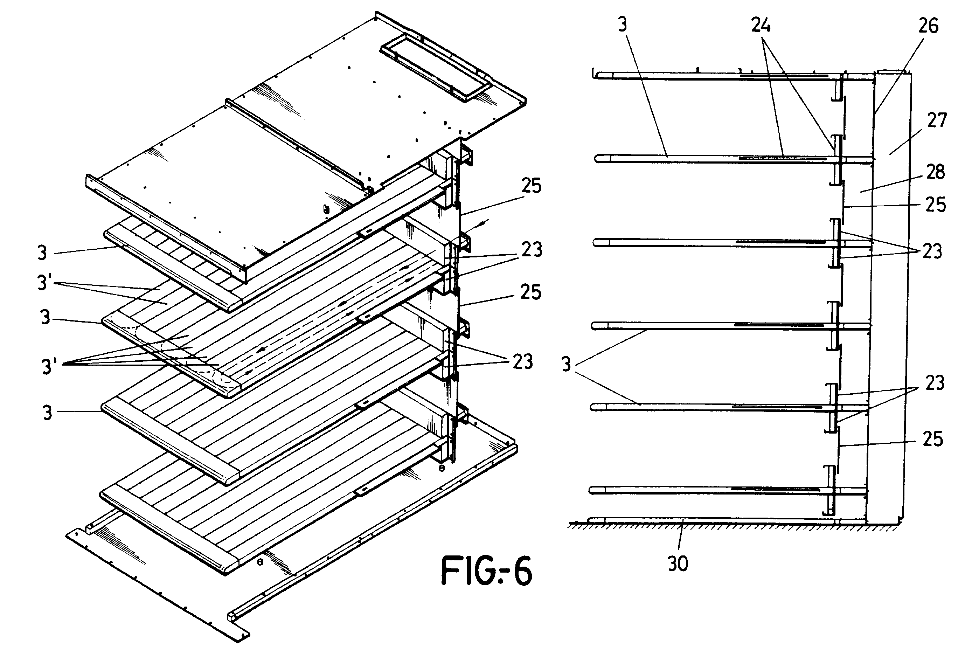

Furthermore and as shown in figures 6 to 9, the hearths (3) can be assembled, laid out and adjusted in their position in a particular manner, each such hearth (3) comprising respective radiant panels (3') and a tie plate (23) joined to one of the ends of the hearth (3) as such, defining what could be considered as an assembling system based upon basic modules generally numbered (24) in figure 6.

The said tie plates (23) are fixed to suitably sized transverse strips of plate (25) to hold the required spacing between the set baking levels, or to a single plate covering the rear of the baking chamber, provided with holes meeting the tie plates (23), to which the said plates are coupled to close the partition thus formed, leaving only windows at the ducts for air returning from and combustion gas reaching the radiant panels (3').

A partition (26) comprising a plate having holes matching those for gas input to the radiant panels (3') is also provided, being the limiting means between the impulsion (27) and the aspiration (28) manifolds.

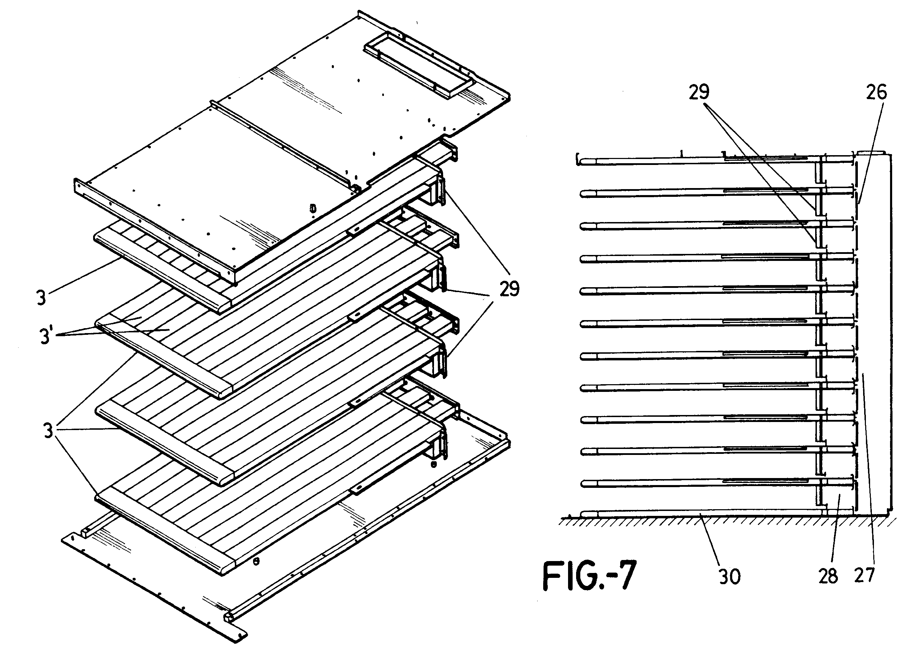

Figure 7 shows another way in which the oven can be assembled using the proposed system, in which each of the hearths is joined to a rear part (29), this part varying in size depending upon the number of baking levels required, a part between tied between the same and that of adjacent hearths thereby to make up the rear partition of the baking chamber, without transverse strips being required.

Figures 6 and 7 also show the provision of a lower hearth (30) flush with the floor designed to offset heat losses through the floor.

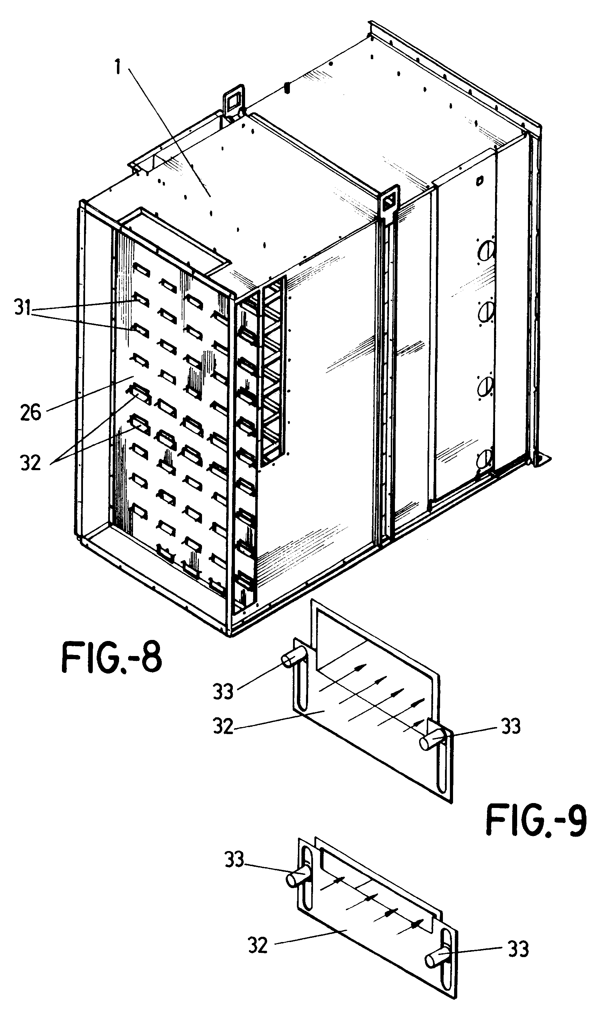

As shown in figure 8, the partition (26) has holes (31) for gases to enter the radiant panels (3'), each of the said holes (31) having a manually driven adjustment plate (32) moving vertically, guided by pins (33) fixed to the rear wall (26), opening or closing the said holes (31) to a greater or lesser extent for the passage of the gases contained in the manifold, each such plates (32) being independent, thereby to allow each panel to be separately adjusted.

We feel that the description need not be extended any longer for any expert in the art to have grasped the full scope of the invention and the advantages it offers.

The materials, shape, size and layout of the elements may be altered provided that this entails no modification of the essential features of the invention, as defined by the claims.

The terms used to describe the invention herein should be taken to have a broad rather than a restrictive meaning.

## Claims

1. An oven comprising a single baking chamber with radiant heating panels, the oven being suitable for Tray-trolleys having the products to be baked be introduced into the same, characterised by having attached to the baking chamber (1) at its side opposite the entrance for tray-trolleys an aspiration manifold (2) joined to a large aspiration chamber or lung (5) which outlet is joined to two turbines (7) located on the roof of the said chamber (5), which propel the air to a mixing chamber (8) passing, once the said returning air (A) has been mixed with combustion gases originating in the combustion chamber (9), to an expansion chamber (10) that in turns leads into a large impulsion manifold (13) propelling the said mixture to the radiators at the hearths (3) of the baking chamber (1), and each hearth (3) has been devised to comprise various radiant panels (3') for the combustion gases, with free stepped ends, in such a way that the aspiration end slightly oversteps a tie plate (23) locked to the hearth (3) and the impulsion end, somewhat longer, is plugged into and screwed to a partition (26) separating the impulsion (27) and aspiration (28) manifolds, being particular in that the tie plates (23) are fixed to transverse strips of plate (25) thereby for the rear wall of the baking chamber as such to be defined by the plates (23) and the strips (25).

2. An oven, as in claim 1, characterised in that the mixing chamber (8) is provided with a cylindrical combustion chamber (9) tied at an end of the side partition of the said chamber, a conventional burner (15) being coupled at such end, the said chamber (9) having a free end for the output of gases, facing a deflecting cone that blocks the said output of gases, saving a small circumferential annular surface (17) and a number of small holes (19) for the output of combustion gases generated in such chamber (9) provided at four uniformly spaced generators on the outer surface of the combustion chamber (9).

3. An oven, as in the above claims, characterised in that the mixing chamber (8) has a vertical partition (18) separating it from the expansion chamber (10) located at a small distance from the base of the deflecting cone (16), having an eight-angled or round hole (11) facing the base of the said deflecting cone (16), thereby throttling the passage of the said gases through the hole (12) towards the expansion chamber (10).

4. An oven, as in the above claims, characterised in that the roof of the impulsion manifold (13) has a safety trap (22) comprising a tray held to the roof of the said manifold (13) by thin wires that are unable to hold the said trap in the closed position in the event of an explosion, thereby presenting a means for gases contained in the oven to be exhausted.

5. An oven, as in claim 1, characterised in that the partition (26) separating the impulsion (7) and aspiration (8) manifolds, has holes (31) meeting the ducts for the input of combustion gases to the radiant panels (3'), and manually driven adjustment plates (32) are provided facing such holes (31), moving vertically and independently.

6. An oven, as in claims 1 and 5, characterised in that a lower hearth (30) is provided that is similar to the hearths (3) at the higher levels and is located flush with the floor of the oven to offset heat losses through the said floor.

7. An oven, as in claims 1, 5 and 6, characterised in that the rear parts (29) locked to the hearths (3) are screwed to each other to form a rear wall of the baking chamber.

## Patentansprüche

1. Aus einer einzigen Backkammer mit Strahlungsheizpaneelen bestehender Ofen, der zum Einschieben von mit den Backwaren beladenen Tablettschlitten in denselben geeignet ist, dadurch gekennzeichnet, daß an der dem Tablettschlitteneingang gegenüberliegenden Seite der Backkammer (1) ein Saugfänger (2) angebaut ist, der mit einer Großkammer bzw. einer Sauglunge (5) verbunden ist, deren Ausgang an zwei an der Decke der genannten Kammer (5) angebrachten Turbinen (7) anschließt, welche die Luft zu einer Mischkammer (8) hin treiben; dieser Luftstrom gelangt, nachdem sich die genannte Rücklaufluft (A) mit den von der Verbrennungskammer (9) kommenden Verbrennungsgasen gemischt hat, zu einer Expansionskammer (10), die wiederum an einen großen Antriebsfänger (13) angeschlossen ist, der die genannte Mischung zu den Radiatoren der Ofenplatten (3) in der Backkammer (1) treibt; dabei ist vorgesehen, daß jede Ofenplatte (3) jeweils aus mehreren Strahlungsheizpaneelen (3') für die Verbrennungsgase mit abgestuften freiliegenden Enden bestehen soll, so daß das aufsaugende Ende leicht über eine mit der Ofenplatte (3) verbundene Befestigungsplatte (23) hinausragt, und das etwas längere, austreibende Ende mit Schrauben an eine Trennwand (26) zwischen den Antriebsfängern (27) und Saugfängern (28) angeschlossen und befestigt ist, mit der Besonderheit, daß die Befestigungsplatten (23) so an Querblechbänder (25) befestigt sind, daß die Platten (23) und Bänder (25), die Hinterwand der Backkammer selbst bilden.

2. Ofen, gemäß Anspruch 1 dadurch gekennzeichnet, daß in der Mischkammer (8) eine zylindrische Verbrennungskammer (9) eingebaut ist, die an einem Ende an der Seitenwand der genannten Kammer befestigt ist, wobei an demselben Ende ein herkömmlicher Brenner (15) angeschlossen ist und die genannte Kammer (9) über ein freiliegendes Ende für den Gasaustritt verfügt, das einem Ablenkkegel gegenübersteht, der den genannten Gasaustritt bis auf eine kleine ringförmige Umfangsöffnung (17) abdeckt, sowie über eine Reihe von kleinen Öffnungen (19) zum Austritt der in der Kammer (9) entstandenen Verbrennungsgase, die auf vier voneinander gleich entfernten Mantellinien an der Außenfläche der Verbrennungskammer (9) angeordnet sind.

3. Ofen, gemäß der vorhergehenden Ansprüche dadurch gekennzeichnet, daß in der Mischkammer (8) eine senkrechte, von der Expansionskammer (10) abtrennende, Trennwand (18) angebracht ist, die sich in geringem Abstand zur Grundfläche des Ablenkkegels (16) befindet und über eine achteckige bzw. kreisförmige, der Grundfläche des genannten Ablenkkegels (16) gegenüberliegende Öffnung (11) verfügt, so daß der Durchtritt der genannten Gase durch die Öffnung (12) in die Expansionskammer (10) hinein gedrosselt wird.

4. Ofen, gemäß der vorhergehenden Ansprüche dadurch gekennzeichnet, daß an der Decke des Antriebsfängers (13) eine Sicherheitsklappe (22) eingebaut ist, die aus einer mittels feiner Drähte an der Decke des genannten Fängers (13) befestigten Platte besteht, wobei diese Drähte, wenn es zu einer Explosion kommt, die erwähnte Sicherheitsklappe nicht in ihrer geschlossenen Position zu halten vermögen, und so einen Weg zum Entweichen der im Ofen enthaltenen Gase bieten.

5. Ofen, gemäß Patentanspruch 1 dadurch gekennzeichnet, daß die Trennwand (26) zwischen dem Antriebs- und dem Saugfänger (7) und (8) über Öffnungen (31) verfügt, die mit den Eintrittskanälen für den Eintritt der Verbrennungsgase in die Strahlungsheizpaneele (3') übereinstimmen, und diesen Öffnungen (31) gegenüber senkrecht verstellbare und von Hand zu betätigende Regulierplatten (32) angeordnet sind.

6. Ofen, gemäß den Patentansprüchen 1 und 5 dadurch gekennzeichnet, daß er eine untere den Ofenplatten (3) der oberen Etagen ähnliche Ofenplatte (30) enthält, die auf Bodenhöhe angebracht wird, um Wärmeverluste über den Boden auszugleichen.

7. Ofen, gemäß den Patentansprüchen 1, 5 und 6 dadurch gekennzeichnet, daß die mit der Ofenplatte verbundenen Hinterstücke (29) durch Verschrauben miteinander befestigt werden und die Hinterwand der Backkammer bilden.

## Revendications

1. Un four composé d'une seule chambre de cuisson avec des panneaux de chaleur radiants, four qui est adéquat pour y introduire des chariots porte-plateaux contenant les produits destinés à être cuits, caractérisé car il a adossé à la chambre de cuisson (1) au côté opposé à l'entrée de chariots porte-plateaux, un collecteur d'aspiration (2) associé à une grande chambre ou poumon d'aspiration (5), dont la sortie est reliée à deux turbines (7) situées au plafond de ladite chambre (5) qui impulsent l'air vers une chambre de mélange (8), en passant, une fois ledit air de retour mélangé (A) avec les gaz de combustion provenant de la chambre de combustion (9), vers une chambre d'expansion (10) communiquant avec un grand collecteur d'impulsion (13) dudit mélange aux radiateurs des soles (3) de la chambre de cuisson (1) étant prévu que chaque sole (3) soit formée à partir de plusieurs panneaux radiants (3') des gaz de combustion, aux extrémités libres échelonnés, de telle façon que l'extrémité d'aspiration dépasse légèrement une plaque d'attache (23) solidaire à la sole (3) et l'extrémité d'impulsion, un peu plus prolongé, soit branchée et fixée avec des vis, sur une cloison de séparation (26) des collecteurs d'impulsion (27) et d'aspiration (28), avec la particularité que les plaques d'attache (23) sont fixées à des bandes de tôle transversales (25), de telle façon que les plaques (23) et les bandes (25) déterminent la paroi postérieure de la chambre de cuisson.

2. Un four, selon la 1ère revendication, caractérisé car dans la chambre de mélange (8), il y a une chambre de combustion (9), de forme cylindrique, attachée à une extrémité à la cloison latérale de ladite chambre, s'accouplant à cette extrémité un brûleur conventionnel (15), ladite chambre (9) disposant d'une extrémité libre de sortie de gaz, face à un cône déflecteur qui bouche ladite sortie de gaz sauf sur une petite superficie annulaire périphérique (17), ainsi qu'une série de petits orifices (19), d'échappement des gaz de combustion générés dans cette chambre (9), disposés en quatre lignes équidistantes de la superficie externe de la chambre de combustion (9).

3. Un four, selon revendications précédentes, caractérisées car la chambre de mélange (8) intègre une cloison verticale (18) de séparation avec la chambre d'expansion (10), située à une petite distance de la base du cône déflecteur (16), ayant un orifice octogonal ou circulaire (11) face à la base dudit cône déflecteur (16), étranglant ainsi le passage desdits gaz à travers l'orifice 812) vers la chambre d'expansion (10).

4. Un four, selon revendications précédentes, caractérisé car il intègre au plafond du collecteur d'impulsion (13) une trappe de sécurité (22) formée d'un plateau tenu au plafond dudit collecteur (13) par des fils fins, qui ne sont pas capables de maintenir ladite trappe dans sa position de fermeture lorsqu'il se produit une explosion, constituant ainsi une voie d'échappement pour les gaz contenus dans le four.

5. Un four, selon la 1^{ère} revendication, caractérisé car la cloison de séparation (269 des collecteurs d'impulsion et d'aspiration (7) et (8), est dotée d'orifices (31) coïncidants avec les conduits d'entrée de gaz de combustion aux panneaux radiants (3'), en ayant face à ces orifices (31) des plaques de réglage (32) dotées de mouvement vertical indépendant et de commande manuelle.

6. Un four, selon revendications 1^{ème} et 5^{ème}, caractérisé car il intègre une sole inférieure (30) semblable aux soles (3) des niveaux supérieurs, se situant à raz du sol du four, pour compenser les pertes de chaleur produites à travers le four.

7. Un four, selon revendications 1^{ème} , 5^{ème} et 6^{ème}, caractérisé car les pièces postérieures (29), solidaires aux soles (3), sont fixées entre elles, par vissage, formant ainsi la paroi postérieure de la chambre de cuisson.
